# EUROPEAN PATENT APPLICATION

(11) **EP 4 516 487 A1**
(43) Date of publication of application: **05.03.2025**
(21) Application number: 23194013.1
(22) Date of filing: 29.08.2023
(51) Int. Cl.: B29C 70/00, B25J 15/00, B29C 31/00, B29C 31/08, B29C 65/78, B29C 65/00, B29C 70/30, B29C 70/38, B29C 70/54, B29D 99/00, B32B 38/18, B64F 5/10, F03D 1/06

(54) **LAYUP ARRANGEMENT**

(71) Applicant: Siemens Gamesa Renewable Energy A/S, 7330 Brande (DK)
(72) Inventor: Gungor, Sila, 9000 Aalborg (DK); Joergensen, Jens Grandjean, 9000 Aalborg (DK); Kettner, Theresa, 9220 Aalborg (DK); Lebreton, Gregoire, 9000 Aalborg (DK); Mateu, Alfredo Esbri, 6580 Vamdrup (DK)
(74) Representative: SGRE-Association

(57) **Abstract**

The invention describes a layup arrangement (1) for use in a method of moulding a wind turbine rotor blade (2), comprising a number of hanging preforms (10), each comprising a shaped body (10B) formed from a plurality of reinforcement fibre sheets (10L) bonded by a previously activated binder (B), and a hang-off portion (10H) for hanging the shaped body (10B) from the upper edge of a mould (M2); and a number of holding means (11) provided at a tooling surface (4), each holding means (11) arranged to engage with a hang-off portion (10H) of a hanging preform (10). The invention further describes a method of manufacturing a wind turbine rotor blade (2) using such a layup arrangement (1).

## Description

### Background

A wind turbine rotor blade is generally a composite manufactured in a procedure that involves arranging layers of reinforcing fibre material in a mould, infusing resin through the layers, and curing the resin-infused layup. The reinforcing fibre material usually comprises relatively cheap glass fibre, while the more expensive carbon-fibre-reinforced polymers (CFRP) or aramid fibre-reinforced polymers may be deployed for added strength and stiffness in certain parts of the rotor blade.

A long rotor blade for a modern wind turbine can easily have a length of 80 m or more, reaching 5 m or more at the widest point along its span. The layup for such a long rotor blade can involve many layers, each of which must be laid with care and precision, since the structural properties of the rotor blade depends to a large extent on the types of reinforcing material and the number of layers used in the various regions of the layup. To simplify the layup procedure when manufacturing a wind turbine rotor blade, it is known to arrange "preforms" in the mould. A preform is a component made from several layers of fabric/textile reinforcement and may also include one or more layers of a core material such as balsa wood. These layers are cut to the desired size and shape in an initial stage and coated with a thermosetting or thermoplastic binder. After arranging the layers in a stack, heat is applied to activate the binder, which softens and causes adjacent layers to adhere. At this stage, the component can be shaped as desired, for example as a curved part to match the curvature of the rotor blade in the region in which it will be deployed. After cooling, the binder hardens once more and the component retains that curved shape, since the layers now adhere to each other. A shaped and hardened preform can be arranged in a rotor blade mould during the layup procedure, for example in any region that would otherwise require many steps to build up the desired number of reinforcing fibre layers. Generally, a preform extends only over a fraction of the width/length of the layup and is a relatively small part. A problem with using preforms is that it is difficult to hold them in place during the layup procedure. Any preform arranged on an inclined part of the mould may tend to slip and move to a lower position. Slippage is most likely to occur in curved regions such as the circular root portion, but can occur in any part of the rotor blade with a pronounced curvature, for example at the leading edge. A preform that has slipped from its intended position presents a serious problem, since the actual layup no longer corresponds to the specification, and the structural properties of the rotor blade may be compromised. The problem of preform slippage can be remedied by applying a high-friction material to the surfaces of a preform so that it is less likely to slip. However, this adds an additional step to the procedure and is not entirely reliable. In any case, the weight of a preform with a high-friction material on its underside can result in it dragging any underlying layers with it as gravity pulls it to a lower position in the mould.

It is therefore an object of the invention to provide a solution to the problem outlined above.

This object is achieved by the claimed layup arrangement and by the claimed method of manufacturing a wind turbine rotor blade.

### Description

The layup arrangement described below is particularly suited for use in a method of moulding a wind turbine rotor blade, but can of course be deployed in the manufacture of any large composite object.

According to the invention, the layup arrangement comprises a number of (i.e. one or more) hanging preforms, each with a shaped body formed from a plurality of reinforcement fibre sheets held together by previously activated binder, and a hang-off portion for hanging the shaped body from the upper edge of a mould. The layup arrangement further comprises a number of holding means arranged on a tooling surface, each holding means arranged to engage with a hang-off portion of a hanging preform.

The tooling surface can be part of the mould or external to the mould, and shall be understood to be arranged so that, when a hang-off portion of a hanging preform is attached to a holding means, the shaped body of the hanging preform is effectively suspended from the upper edge of the mould. The hang-off portion of a hanging preform can be an extension of the preform itself, or can be attached to the preform body as will be explained below.

An advantage of the inventive layup arrangement is that it facilitates the inclusion of preforms that would otherwise slip and move from their intended position in the mould. The inventive layup arrangement therefore provides an economical and straightforward way of incorporating any kind of preform shape in a wind turbine rotor blade layup, while ensuring that the layup is carried out according to specification.

The invention also describes a way of manufacturing a wind turbine rotor blade using such a layup arrangement: according to the invention, the method of manufacturing a wind turbine rotor blade comprises steps of: providing a number of hanging preforms, each comprising a shaped body formed from a plurality of reinforcement fibre sheets bonded by a previously activated binder, and a hang-off portion for hanging the shaped body from the upper edge of a mould; and providing a number of holding means at a tooling surface, each holding means arranged to engage with a hang-off portion of a hanging preform. The method proceeds with a stage of forming a layup in the mould. This is done by attaching the hang-off portion of each hanging preform to a holding means and arranging the shaped body of that hanging preform at the appropriate position in the mould; and arranging further layers of reinforcing material in the mould.

The position of each preform (and the position of any reinforcing material layer) can be defined in a layup specification. An advantage of the inventive method is that curved preforms can simply be placed at their specified positions during the layup procedure, and it is not necessary for technicians to take time-consuming measures to prevent slippage of the preforms. Instead, a step of placing a hanging preform in the mould can be as straightforward as placing a fibre sheet in the mould.

Particularly advantageous embodiments and features of the invention are given by the dependent claims, as revealed in the following description. Features of different claim categories may be combined as appropriate to give further embodiments not described herein.

The expressions "fibre-reinforced sheet", "fibre sheet" and simply "sheet" shall be understood to be synonyms and may be used interchangeably herein.

Any number of hanging preforms can be are arranged in the mould, at any suitable positions in the mould. Hanging preforms can also be "stacked" to any suitable depth, i.e. after placing a hanging preform in the mould, another hanging preform can be arranged over it. In this way, the layup for a large wind turbine rotor blade can be simplified considerably.

In a particularly preferred embodiment of the invention, the shaped body of a hanging preform is shaped for placement at a mould position corresponding to any of: the trailing edge of a rotor blade airfoil portion; the leading edge of a rotor blade airfoil portion; the rotor blade root portion. Depending on its destined position in the layup, the preform shape is based on the specific rotor blade mould curvature at that position. A hanging preform intended for placement in the essentially circular root portion can be shaped as an arc; a hanging preform intended for placement at the leading edge of the airfoil portion can have a more pronounced curvature; a hanging preform intended for placement between leading edge and trailing edge can have a correspondingly shallow curvature. Of course, the shape of a preform need not necessarily correspond to the shape of the mould at that position. In each case, the length of the hang-off portion is chosen to allow the preform body to be placed precisely at its destined position, with the hang-off portion extending from an upper edge of the preform body to the holding means provided at the tooling surface.

The hang-off portion can be realized as one or more fibre sheets extending from an upper edge of the shaped body. It may be sufficient to provide a single hang-off portion extending from the shaped body. Of course, one or more further sheets may extend from the opposite edge of the preform body, and can be incorporated in the rotor blade layup.

The hang-off portion can be part of a fibre sheet that extends over or under the stack from which the preform body is made. Alternatively, the hang-off portion can be part of a fibre sheet that extends about the stack.

A holding means can be realised in any suitable manner. For example, a holding means can comprise a hook-and-loop fastener, a suction assembly, a mechanical clamp, an electromagnetic device, an adhesive, etc. The tooling surface on which the holding means is provided can be the surface of a mould flange, an upward-facing surface about the mould perimeter, or a surface of a separate tooling element such as a scaffolding platform.

If spikes are provided about the perimeter of the mould for the purpose of holding very long sheets in place (such long sheets can extend from one side of the mould to the other), these spikes may be used also as holding means for the hanging preforms.

The inventive layup arrangement can be used in different kinds of moulding techniques. For example, in a "closed mould" method, a rotor blade layup can be done by filling a lower mould half (e.g. the suction side mould) with a first or lower layup including spar caps and a shear web; arranging a mandrel in the mould; and forming a second or upper layup over the mandrel. At this stage, any hang-off portions can be detached from their holding means and cut to size if necessary. The hang-off portion of a preform may be incorporated in the upper layup. After completing the upper layup, an upper mould half (e.g. the pressure side mould) is placed on the lower mould half. The mould is then closed and a vacuum is established, so that resin infusion and curing steps can be performed.

In an alternative "open mould" method, the layup, infusion and curing steps can be done separately for the suction side and the pressure side of a rotor blade. A layup is prepared in each half-mould. Prior to a vacuum-bagging step, any hang-off portions can be detached from their holding means and cut to size if necessary. After preparing the vacuum-bag setup, a vacuum is established and the resin infusion and curing steps are performed. After demoulding and finishing steps, the cured rotor blade halves can then be bonded along their perimeters.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 4 show stages in the manufacture of a hanging preform of the inventive layup arrangement;
Figure 5 shows a variety of such hanging preforms;
Figure 6 shows an exemplary way of joining a hang-off portion to a preform body;
Figure 7 illustrates a stage during the layup of a wind turbine rotor blade;
Figures 8 - 10 shows various embodiments of the inventive layup arrangement;
Figure 11 shows a wind turbine rotor blade manufactured using the inventive method.

In the diagrams, like numbers refer to like objects throughout. Objects in the diagrams are not necessarily drawn to scale.

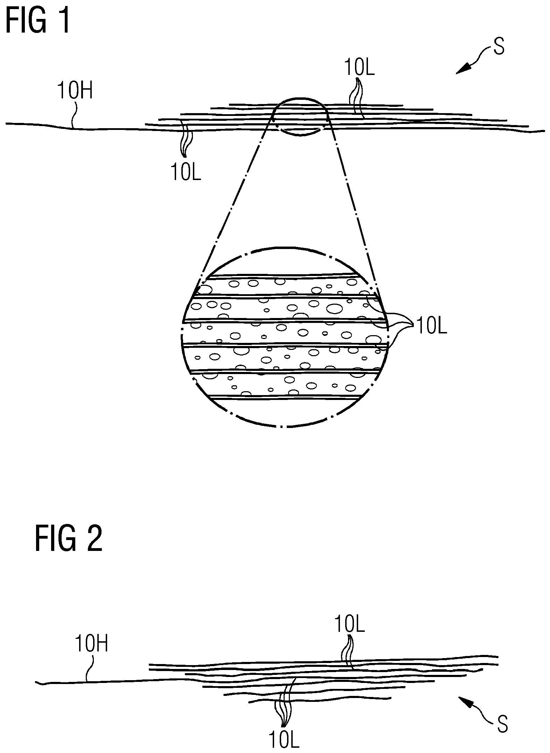

Figures 1 - 4 show stages in the manufacture of an exemplary embodiment of a hanging preform 10 for the inventive layup arrangement. Figure 1 shows a stack S of fibre sheets 10L. Each sheet 10L or layer is previously cut to the desired shape and size, and the sheets 10L are arranged in a desired order to form the stack S. As explained above, a reinforcement fibre sheet can be a woven sheet or non-woven sheet made of any suitable reinforcement fibre or combination of reinforcement fibres. As shown in the enlarged portion, a thermosetting or thermoplastic binder B can be applied to one or both surfaces of each layer 10L, for example by spray-coating droplets of a suitable epoxy paste or sprinkling a binder B in powder form onto the layers 10L.

The stack S can have a simple shape (e.g. each cross-section is essentially rectangular) or a more complex shape (e.g. one or more sides of the stack is angled), as shown here. In this exemplary embodiment, the lowest layer of the stack S is longer than the other layers, forming a hang-off portion 10H at one side of the stack S. Of course, any one of the stack layers can be the "long layer", so that the hang-off portion can extend from any layer of the stack as indicated in Figure 2.

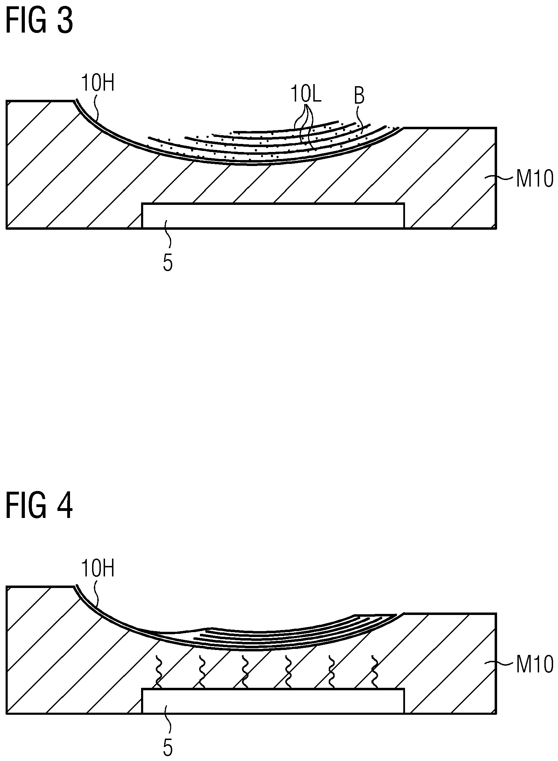

In Figure 3, preparation of the preform continues by shaping the stack S according to a desired curvature, for example the curvature at the leading edge in a wind turbine rotor blade airfoil. A suitably-shaped mould M10 can be used for this stage. Of course, the steps of building the stack S and shaping the stack S can be combined, i.e. the steps of Figure 1 and Figure 2 can also be performed in the preform mould M10.

In Figure 4, the preform 10 is completed by vacuum-bagging the mould M10, establishing a vacuum, and applying heat (an exemplary heater 5 is shown) to activate the binder B, which softens and causes adjacent sheets 10L of the stack to adhere to each other, defining the shaped body of the hanging preform. The hang-off portion 10H remains unaffected by this bonding stage. After the activation process is complete, the hanging preform 10 is allowed to cool and is then removed from the mould M10.

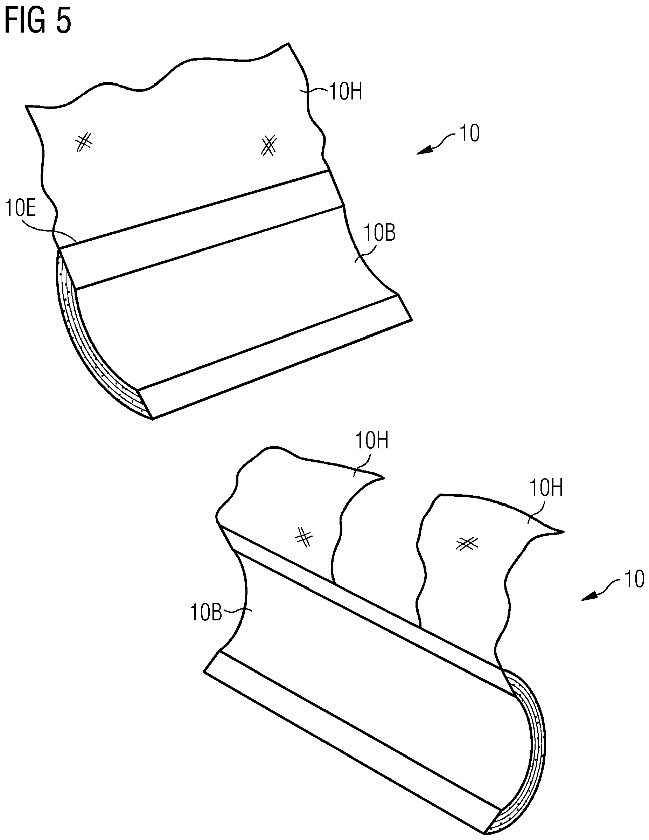

Figure 5 shows a variety of completed hanging preforms 10, to illustrate the various shapes that can be incorporated in the layup of a wind turbine rotor blade.

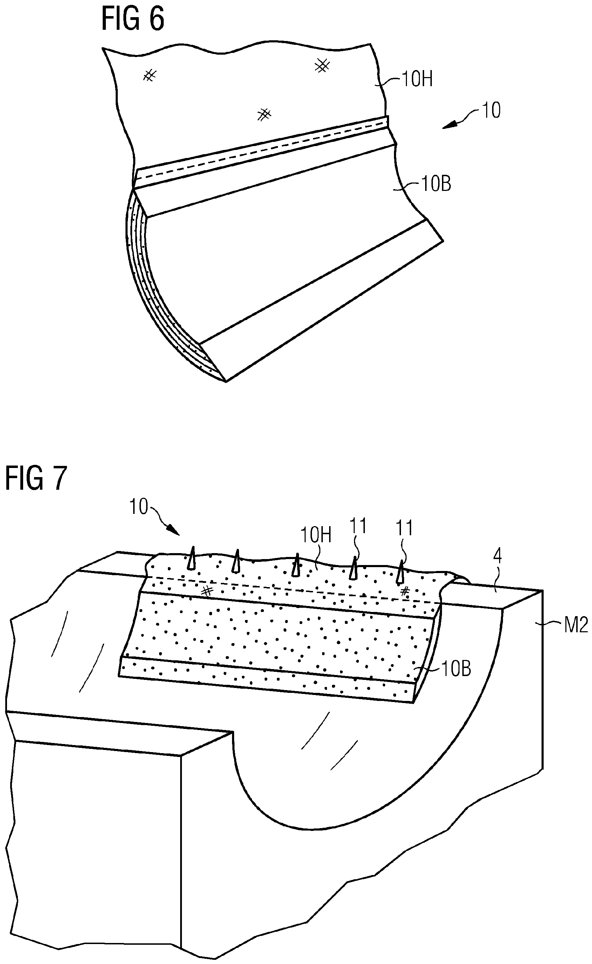

Instead of realizing the hang-off portion as an extension of a layer 10L of the initial stack S, a hang-off portion 10H can be attached to the shaped body 10B by stitching or by an adhesive bond, as indicated in Figure 6.

Figure 7 illustrates a stage during the layup of a wind turbine rotor blade. The diagrams show perspective cutaway views into a lower mould M2, taken at some point along the airfoil portion. The upper surface along the mould perimeter is a tooling surface 4, and upwardly-projecting spikes 11 are provided at intervals along this tooling surface 4. It is known to use such spikes 11 to "catch" and hold the upper edges of long fibre sheets laid in such a mould M2. A hanging preform 10 is placed at its corresponding position in the mould M2. To keep the shaped body 10B in place without slipping, the hanging preform 10 has a long hang-off portion 10H which can be secured using the spikes 11.

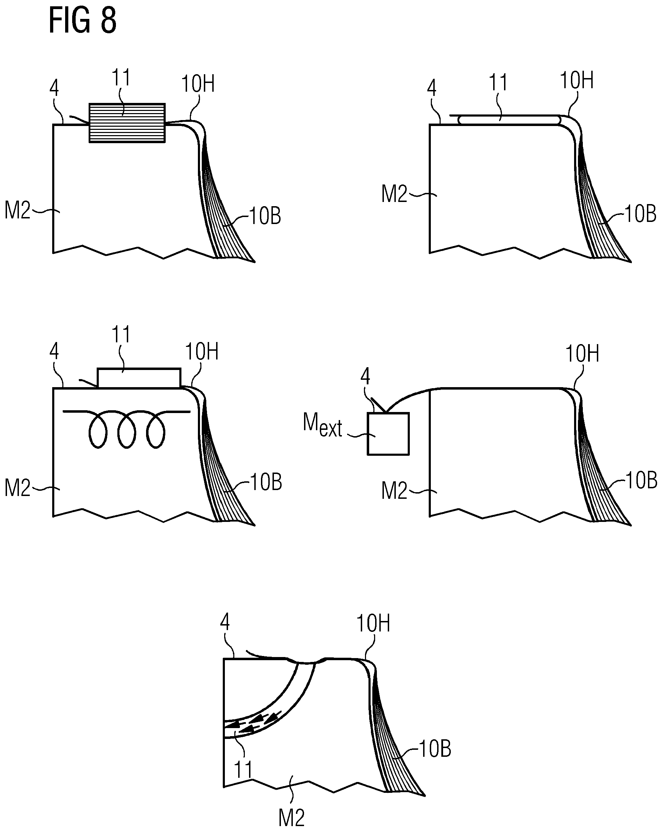

For various reasons, spikes as shown above may not be present at the tooling surface, and there are various other ways of realizing the inventive layup arrangement 1. Figures 8 - 10 shows various embodiments of the inventive layup arrangement to illustrate the proposed anti-sliding concept:
Figure 8 shows other types of holding means 11 for fixing a hanging preform at its position in a mould M2. Starting at upper left, these holding means are: a clamp 11 at a mould upper surface 4; an adhesive bond 11 at a mould upper surface 4; an electromagnet 11 with a coil arranged in the body of the mould M2; a counterweight 11; a suction arrangement 11 with a channel formed in the body of the mould M2. The inventive layup arrangement 1 is therefore easy to integrate into a variety of moulding techniques.

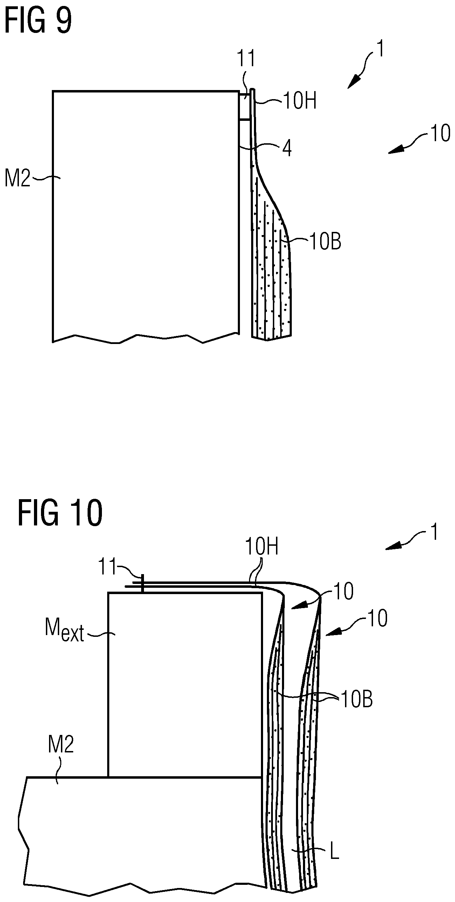

Figure 9 shows a possible alternative. Here, a hanging preform 10 is secured to a vertical surface 4 of the mould M2 by a suitable holding means 11 (for example an adhesive bond, a hook-and-loop fastener, etc.).

Figure 10 shows a further possible alternative, illustrating two further aspects of the inventive approach. Here, two hanging preforms 10 are arranged in the mould M2, one over the other. Furthermore, the hanging preforms 10 are arranged so that they extend above the upper surface of the mould M2. The hang-off portions 10H are secured to an upper surface 4 of a mould extension Mₑₓₜ using spikes 11 extending from the upper surface 4 (or any of the other holding means shown in Figure 8). This technique can be used to suspend a single hanging preform 10 - or any other number of hanging preforms 10 - in the mould M2. Similarly, the embodiments shown in Figures 8 and 9 can be used to secure any number of hanging preforms 10.

The steps of moulding a rotor blade generally comprise filling a lower mould (e.g. the suction side mould) with a first layup including spar caps and a shear web; arranging a mandrel in the mould; forming a second layup on the first layup; placing an upper mould (e.g. the pressure side mould) on top of the lower mould, closing the mould and then performing resin infusion and curing steps. Instead of this "closed mould" method, the inventive layup arrangement can of course be used to good effect in an "open mould" method in which rotor blade halves are formed and cured separately, and then bonded along their perimeters.

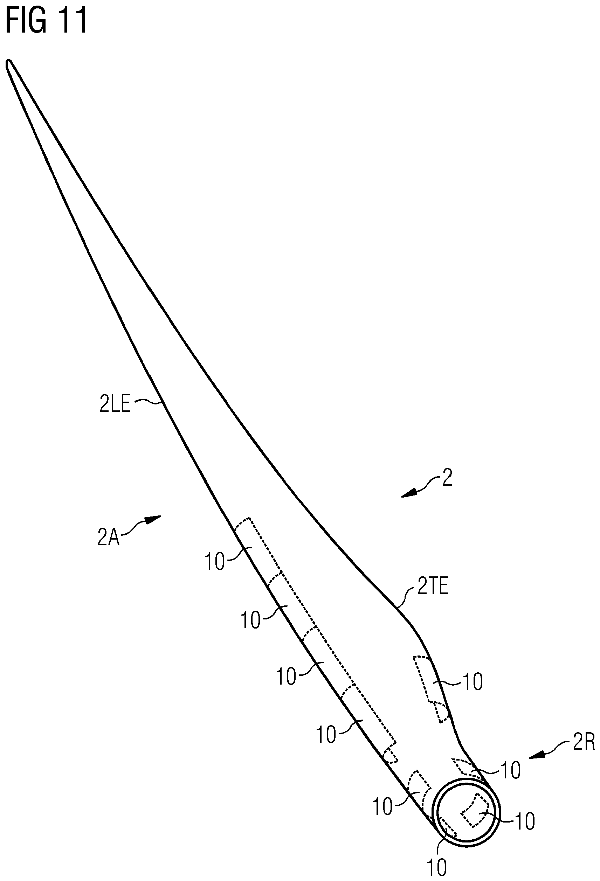

Figure 11 shows a wind turbine rotor blade manufactured using the method described above. The layup for this rotor blade 2 can incorporate multiple hanging preforms 10, as indicated by the ghost lines. Arc-shaped hanging preforms 10 can be deployed in the root region, while "tighter" hanging preforms (with more pronounced curvature) can be used along the leading edge 2LE and trailing edge 2TE, and "flatter" hanging preforms 10 can be used along the pressure side and suction side of the rotor blade airfoil 2A.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A layup arrangement (1) for use in a method of moulding a wind turbine rotor blade (2), comprising
- a number of hanging preforms (10), each comprising a shaped body (10B) formed from a plurality of reinforcement fibre sheets (10L) bonded by a previously activated binder (B), and a hang-off portion (10H) for hanging the shaped body (10B) from the upper edge of a mould (M2); and
- a number of holding means (11) provided at a tooling surface (4), each holding means (11) arranged to engage with a hang-off portion (10H) of a hanging preform (10).

2. A layup arrangement according to the preceding claim, wherein the shaped body (10B) of a hanging preform (10) comprises a plurality of reinforcement fibre sheets embedded in a previously activated binder (B).

3. A layup arrangement according to any of the preceding claims, wherein the shaped body (10B) of a hanging preform (10) is shaped for placement at a mould position corresponding to: the rotor blade trailing edge (2TE); or the rotor blade leading edge (2LE); or the rotor blade root portion (2R).

4. A layup arrangement according to any of the preceding claims, wherein the hang-off portion (10H) of a hanging preform (10) comprises a fibre sheet (10L) extending from an upper edge (10E) of the shaped body (10B).

5. A layup arrangement according to any of the preceding claims, wherein a hanging preform (10) comprises two or more hang-off portions (10H).

6. A layup arrangement according to any of the preceding claims, wherein the hang-off portion (10H) of a hanging preform (10) is part of an outer reinforcement fibre sheet (10L) of that hanging preform (10).

7. A layup arrangement according to any of the preceding claims, wherein a holding means (11) comprises any of: an upwardly extending spike; a hook-and-loop fastener; an electromagnet arrangement; a counterweight; a clamp arrangement fastener; a vacuum arrangement; an adhesive.

8. A layup arrangement according to any of the preceding claims, wherein the tooling surface is any of: a surface of a mould flange, an upper face about the mould perimeter, a surface of a separate tooling element (Mₑₓₜ).

9. A method of manufacturing a wind turbine rotor blade (2), which method comprises
- providing a number of hanging preforms (10), each comprising a shaped body (10B) formed from a plurality of reinforcement fibre sheets (10L) bonded by a previously activated binder (B), and a hang-off portion (10H) for hanging the shaped body (10B) from the upper edge of a mould (M2);
- providing a number of holding means (11) at a tooling surface (4), each holding means (11) arranged to engage with a hang-off portion (10H) of a hanging preform (10); and
- forming a layup in the mould (M2) by:
- attaching the hang-off portion (10H) of each hanging preform (10) to a holding means (11) and arranging the shaped body (10B) of that hanging preform (10) in the mould (M2); and
arranging reinforcing material in the mould (M2).

10. A method according to the preceding claim, wherein the layup is a lower layup formed in the lower mould of a closed mould assembly.

11. A method according to the preceding claim, comprising a subsequent step of forming an upper layup over the lower layup.

12. A method according to any of the preceding method claims, wherein a hanging preform (10) is arranged to extend from the lower layup into the upper layup.

13. A method according to any of the preceding method claims, comprising subsequent steps of placing a second mould half on the upper layup and joining the mould halves in preparation for resin infusion and curing.

14. A wind turbine rotor blade manufactured using the method according to any of claims 9 to 13.

15. A wind turbine according to the preceding claim, comprising one or more hanging preforms (10) embedded along its trailing edge (2TE) and/or one or more hanging preforms (10) embedded along its leading edge (2LE) and/or one or more hanging preforms (10) embedded in its root portion (2R).
